Europäisches Patentamt

European Patent Office

Office européen des brevets

(11) Veröffentlichungsnummer: **0 354 268 B1**

# EUROPÄISCHE PATENTSCHRIFT

(45) Veröffentlichungstag der Patentschrift: **17.06.92**

(51) Int. Cl.⁵: **F16D 25/12**, F16D 25/14

(21) Anmeldenummer: **88113142.9**

(22) Anmeldetag: **12.08.88**

(54) **Hydropneumatischer Kupplungsverstärker für Kraftfahrzeuge.**

(43) Veröffentlichungstag der Anmeldung:
**14.02.90 Patentblatt 90/07**

(45) Bekanntmachung des Hinweises auf die
Patenterteilung:
**17.06.92 Patentblatt 92/25**

(84) Benannte Vertragsstaaten:
**DE FR GB IT SE**

(56) Entgegenhaltungen:
**DE-A- 1 959 293**
**FR-A- 2 604 228**
**GB-A- 1 129 576**

**Firmenzeitschrift "Knorr heute", Ausgabe
9/1987 der Firma KNORR-BREMS AG München; DE-A-2 317 209**

(73) Patentinhaber: **KNORR-BREMSE AG**
**Moosacher Strasse 80 Postfach 401060**
**W-8000 München 40(DE)**

(72) Erfinder: **Bestler, Georg**
**Friedhofstrasse 5**
**W-8939 Wiedergeltingen(DE)**
Erfinder: **Unger, Hans**
**St. Benediktstrasse 7**
**W-8044 Unterschleissheim(DE)**

Rank Xerox (UK) Business Services

**Beschreibung**

Die Erfindung betrifft einen hydropneumatischen Kupplungskraftverstärker nach dem Gattungsbegriff des Patentanspruchs 1. Ein solcher Kupplungskraftverstärker ist aus der Firmen-Zeitschrift "Knorr heute", Ausgabe 9/87 bekannt.

Die bei weitem größte Anzahl von Nutzfahrzeugen ist mit mechanischen Getrieben ausgestattet. Dies hat u.a. seinen Grund im guten Wirkungsgrad dieser Getriebe. Zur Verbesserung von Fahrleistungen und Fahrzeugwirkungsgrad sind die Getriebe von Nutzfahrzeugen mit sehr vielen Gangstufen ausgestattet, was an den Fahrer bei Schaltbetätigung erhebliche physische und auch geistige Anforderungen stellt. Durch moderne, fahrzeuggerechte Computer lassen sich die Schaltvorgänge automatisieren und optimieren.

Die zum Anfahren, Rangieren und meist auch zum Gangwechsel erforderliche Kupplung zwischen Motor und Getriebe wird bei den meisten Fahrzeugen als verschleißbehaftete Reibkupplung ausgebildet; diese wird mit dem Fuß betätigt. Die Betätigung erfolgt bei größeren Fahrzeugen meist hydraulisch, bei sehr starken Motoren unter Verwendung pneumatischer Hilfskraft (Kupplungskraftverstärker).

Bei den bekannten Betätigungseinrichtungen für Kupplungen ist ein hydraulisch wirkendes Gesperre (z.B. auch nach DE-A-2 317 209) vorgesehen, welches eine selbsttätige Nachstellung gestattet. Hierbei wird die Längung eines zur Kupplingsbetätigung dienenden Seils in der einen Richtung und der Reibbelagverschleiß der Kupplung in der entgegengesetzten Richtung nachgestellt. Das hydraulische Gesperre besteht aus zwei in der Betätigungseinrichtung angeordneten, mit dieser verfahrbaren Kammern, welche mit hydraulischem Medium gefüllt sind, wobei die erste der Kammern als Arbeitskammer wirkt und Bewegungen eines die Arbeitskammer begrenzenden Arbeitskolbens mittels des hydraulischen Mediums auf ein mit dem zu betätigenden Kupplungsorgan verbundenes Gehäuse überträgt, während die zweite der Kammern im entlasteten Zustand der Betätigungseinrichtung mit der ersten Kammer in Verbindung steht und aus dieser ein dem Ausmaß der notwendigen Nachstellung entsprechendes Volumen des hydraulischen Mediums aufnimmt. Um die im entlasteten Zustand ständig offene Verbindung zwischen den beiden Kammern bei Betätigung des Kupplungshebels zu schließen, wirkt das in der ersten Kammer, der Arbeitskammer, befindliche hydraulische Medium bei Verschiebung des Arbeitskolbens infolge daraus resultierender Druckerhöhung auf einen Schieber ein, welcher seinerseits gegen Federkraft verschieblich die zwischen den beiden Kammern existierende Verbindung überfährt und somit schließt.

Bei normaler Betätigung des Kupplungspedals arbeitet das hydraulische Gesperre nur dann einwandfrei, falls der Schieber gegenüber der Verbindung einwandfrei abdichtet; dies ist jedoch allenfalls bei einer sehr aufwendigen und somit teuren Feinbearbeitung der gegeneinander wirkenden Flächen möglich. Bei nur geringfügiger und langzeitig vorgenommener Betätigung des Kupplungshebels bzw. Kupplungspedals ist darüberhinaus nicht auszuschließen, daß das hydraulische Medium aus der ersten Kammer über die offene Verbindung in die zweite Kammer entweichen kann, ohne daß die erwünschte Schieber-Steuerbewegung zum Zwecke des Verschließens dieser Verbindung stattfindet. Es handelt sich hierbei um einen "Kriechverlust", welcher den Weg der Verbindung zwischen den beiden Kammern nimmt. Hierdurch wird ungewollt eine Reduzierung des Volumens der Arbeitskammer, d.h. ein ungewolltes Nachstellen vollzogen.

Davon ausgehend besteht die Aufgabe der Erfindung darin, einen Kupplungskraftverstärker der gattungsgemäßen Art so auszugestalten, daß die Verbindung zwischen den beiden Kammern absolut sicher unterbrochen wird, wenn der pneumatische Arbeitskolben oder die Gesamtheit aus hydraulischem und pneumatischen Arbeitskolben aktiviert wird.

Zur Lösung dieser Aufgabe dienen die Merkmale nach dem Kennzeichnungsteil des Patentanspruchs 1.

Durch die am Außemumfang des Betätigungskolbens angeordnete Dichtung, welche seitliche Kanäle bzw. Bohrungen im Zylinder zu überschleifen vermag, ist selbst bei geringsten Arbeitshüben des pneumatischen Arbeitskolbens sichergestellt, daß die Verbindung zwischen der eigentlichen Arbeitskammer und der zweiten Kammer, d.h. der Nachstellkammer, gesperrt wird. Der mit dem pneumatischen Arbeitskolben verbundene, in den Zylinder eintauchende Betätigungskolben ist somit wegabhängig Bestandteil des bei Betätigung zu schließenden Nachstellventils als auch unmittelbares Betätigungsorgan, da der Kraftfluß vom Betätigungskolben bei geschlossener erster Kammer über das hydraulische Medium direkt auf den Stößelkolben und somit auf die Druckstange des Verstärkers weitergeleitet wird. Die gesamte Baulänge der Kammer zwischen Betätigungskolben und Stößelkolben steht folglich für die im Verlaufe der Kupplungsbetätigung ausgelösten Nachstellbewegungen des Stößelkolbens zur Verfügung. Vorteilhafterweise stützt sich zwischen dem Betätigungskolben und dem Stößelkolben eine Feder ab, welche zusammen mit dem im System der Kammern existierenden hydraulischen Druck den Stößelkolben und die mit diesem verbundene Druckstange in Richtung der Kupplungseinrichtung vorspannt.

Vorteilhafte Ausgestaltungen und Weiterbildungen sind in weiteren Unteransprüchen aufgeführt.

Die Erfindung ist nachfolgend anhand eines Ausführungsbeispiels unter Bezugnahme auf die beigefügte Längsschnittansicht des erfindungsgemäßen Kupplungskraftverstärkers erläutert.

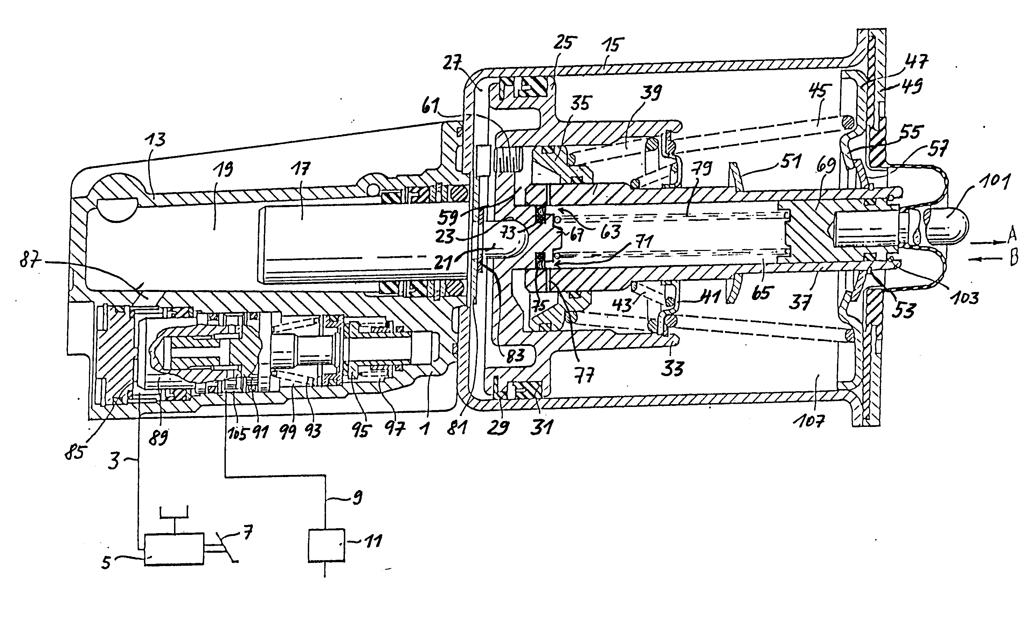

In der Zeichnung ist ein hydropneumatischer Kupplungskraftverstärker dargestellt, an welchem ein Steuerventil 1 von nachfolgend beschriebener Wirkungsweise integriert ist. Das Steuerventil 1 ist mittels einer ein hydraulisches Medium führenden Leitung 3 an einen Geberzylinder 5 von hydraulischer Wirkungsweise angeschlossen. Der Geberzylinder 5 ist in an sich bekannter Weise mittels eines Kupplungspedals 7 betätigbar. An das Steuerventil 1 ist fernerhin über eine Leitung 9 ein Magnetventil 11 angeschlossen; das Magnetventil ist mittels einer (nicht dargestellten) Steuereinrichtung betätigbar, um Druckluft durch die Leitung 9 in das Steuerventil 1 einzuleiten.

Der Kupplungskraftverstärker ist als eine bauliche Einheit durch zwei Gehäuse 13 und 15 zusammengefaßt. Innerhalb des Gehäuses 13 ist ein hydraulischer Arbeitskolben 17 gelagert, welcher durch Einleiten von hydraulischem Medium in einen Zylinderraum 19 beaufschlagbar ist, derart, daß er bei Druckbeaufschlagung gemäß Darstellung eine nach rechts gerichtete Bewegung vollführt. Der Arbeitskolben 17 durchdringt mittels eines an ihm ausgebildeten Stößels 21 den Trennbereich zwischen den beiden Gehäusen 13 und 15 und ist in einer schalenförmigen Vertiefung 23 abgestützt, die an der zugewandten Fläche eines pneumatischen Arbeitskolbens 25 ausgebildet ist. Der Arbeitskolben 25 ist in nachfolgend beschriebener Weise durch Einleiten von Druckluft in den Raum 27 beaufschlagbar, derart, daß er gemäß Darstellung eine nach rechts gerichtete Bewegung auszuführen vermag. Der an seinem Außenumfang vorzugsweise mittels eines Führungsrings 29 und einer Abdichtung 31 gegenüber der Innenwand des Gehäuses 15 geführte Arbeitskolben 25 besitzt einen axial gerichteten, hülsenförmigen Fortsatz 33, innerhalb welchem koaxial ausgerichtet ein Ausgleichskolben 35 unter Abdichtung verschiebbar angeordnet ist. Der Ausgleichskolben 35 ist außenseitig unter Abdichtung gegenüber dem Fortsatz 33 geführt und liegt innenseitig abgedichtet am Außenumfang eines Zylinders 37 an. Eine Feder 39 verspannt den Ausgleichskolben 35 ständig in Richtung des pneumatischen Arbeitskolbens 25, wobei sich die Feder in dargestellter Weise an einem am Fortsatz 33 innenseitig befestigten Anschlagbügel 41 abstützt. Eine weitere, sich am Anschlagbügel 41 abstützende Feder 43 wirkt am Außenumfang des Zylinders 37 ein und verspannt diesen ständig in Richtung des pneumatischen Arbeitskolbens 25. Eine dritte Feder 45 stützt sich an der bezüglich der Federn 39 und 43 entgegengesetzten Seite am Anschlagbügel 41 ab und erstreckt sich bis zu einem Einlegeteil 47 am Boden 49 des Gehäuses 15. Die Feder 45 wirkt direkt gegenüber dem Arbeitskolben 25 und besitzt die Neigung, diesen in seine in der Zeichnung dargestellte Ausgangslage zu verschieben.

Am Außenumfang des Zylinders 37 befinden sich unter axialem Abstand zwei Anschläge, eine Anschlagscheibe 51 und ein Anschlagring 53. Das radial innere Ende des Einlegeteils 47 ist als stationärer Anschlag 55 ausgebildet, wobei zwischen dem Anschlag 55 und dem Boden 49 des Gehäuses 15 eine Anschlagscheibe 57 gehalten ist. Die Anschlagscheibe 57 dient als Endanschlag für den Anschlagring 53, wenn dieser mit dem Zylinder 37 eine nach links gerichtete Bewegung vollführt, während die Anschlagscheibe 51 gegenüber dem Anschlag 55 zur Anlage kommt, wenn die Kolbenstange 37 ein nach rechts gerichtete Bewegung vollzieht.

Der vorstehend genannte Ausgleichskolben 35 begrenzt mit dem pneumatischen Arbeitskolben 25 eine innere Kammer 59, welche zur Aufnahme eines hydraulischen Druckmittels dient. Das hydraulische Druckmittel ist vor dem Zusammenbau der Verstärkereinheit nach Öffnen eines im Arbeitskolben 25 befindlichen Füllstopfens 61 in die Kammer 59 einführbar. Die Kammer 59 erstreckt sich in freier Verbindung bis in den Bereich eines Nachstellventils 63, welches in geschlossenem Zustand (gemäß Darstellung) die Kammer 59 von einer weiteren Kammer 65 zur Aufnahme des hydraulischen Druckmittels trennt. Die Kammer 65 ist zwischen einem vom Arbeitskolben 25 axialmittig sich erstreckenden Betätigungskolben 67 und einem Stößelkolben 69 innerhalb des Zylinders 37 begrenzt. Der Betätigungskolben 67 trägt an seinem Außenumfang eine Dichtung 71, welche im dargestellten Ausführungsbeispiel aus einem inneren O-Ring 73 und einem den O-Ring umschließenden äußeren Ring 75 aus Polytetrafluoräthylen besteht. Die Dichtung 71 wirkt bei axialer Verschiebung des Betätigungskolbens 67 gegenüber den Zylinder durchsetzenden Bohrungen 77, welche in geöffneter Lage des Nachstellventils 63 die Kammer 59 mit der Kammer 65 verbinden. Vorzugsweise sind die Bohrungen 77 unter gleichem Winkelabstand zueinander angeordnet. An den einander zugewandten Seiten des Betätigungskolbens 67 und des Stößelkolbens 69 stützt sich eine Feder 79 ab. Die Feder 79 besitzt die Aufgabe, den Stößelkolben 69 "anzulegen", d. h. gemß Darstellung nach rechts gerichtet zu verspannen, wenn sich die Teile in der dargestellten Ausgangslage befinden.

Der Arbeitskolben 17 wirkt bei Einleiten eines hydraulischen Druckmittels in den Zylinderraum 19 gegenüber dem penumatischen Arbeitskolben 25 und bewegt sich in nachfolgend beschriebener Weise mit diesem nach rechts gerichtet, wobei durch Einleiten von Druckluft in den Raum 27 eine Verstärkerwirkung ausgelöst werden kann. Infolge der Trennung des Arbeitskolbens 25 vom Arbeitskolben 17 kann auch eine rein pneumatische Beaufschlagung des Arbeitskolbens 25 vollzogen werden, ohne daß es erforderlich wäre, den hydraulischen Arbeitskolben 17 gleichzeitig zu beaufschlagen bzw. ohne daß er mitgezogen werden müßte.

Bei rein pneumatischer Beaufschlagung, gesteuert durch Einleiten von Druckluft mittels des Steuerventils 1 in den Raum 27, bewegt sich der pneumatische Arbeitskolben 25 im Sinne des Lösens bzw. Ausrückens der Kupplung, wobei der Arbeitskolben 17 bei drucklosem Zylinderraum 19 in seiner dargestellten Ausgangsposition stehen bleibt. Bei getrennter Bewegung des Arbeitskolbens 25 bedarf es also keines Nachfüllens von hydraulischem Medium in den Zylinderraum 19. Die dargestellte Ausgangslage des abgedichtet gegenüber der Innenwand des Zylinderraums 19 geführten Arbeitskolbens 17 wird durch eine am Stößel 21 geführte Anschlagscheibe 81 sichergestellt. Diese wird ihrerseits von einem Sicherungsring 83 fixiert.

Die Wirkungsweise des Kupplungskraftverstärkers ist wie folgt :

Wird das Steuerventil 1 in herkömmlicher Weise aktiviert, indem der Geberzylinder 5 mittels des Kupplungspedals 7 betätigt wird, so gelangt hydraulisches Druckmittel durch die Leitung 3 in den Raum 85 des Steuerventils und von diesem über einen Kanal 87 in den Zylinderraum 19, derart, daß der Arbeitskolben 17 hydraulisch beaufschlagt, d.h. nach rechts gerichtet verschoben wird. Gleichzeitig wirkt der Druck im Raum 85 auf einen zweiteiligen Steuerkolben 89,91, welcher entgegen der Kraft der Feder 93 gemäß Darstellung nach rechts gerichtet verschoben wird, bis durch ihn ein Ventilteller 95 von seinem Sitz abgehoben und somit ein an einen pneumatischen Vorratsbehälter angeschlossener Raum 97 mit dem Raum 99 und über diesen mittels einer (nicht dargestellten) Verbindung mit dem Raum 27 verbunden ist. Bei Druckeinspeisung in den Raum 27 beginnt die Servowirkung des Kupplungsverstärkers, wobei der Arbeitskolben 25 und der hydraulisch beaufschlagbare Kolben 17 die Betätigungskraft aufbringen. Bei Verschiebung des pneumatisch beaufschlagten Arbeitskolbens 25 bleibt zunächst der Zylinder 37 in seiner dargestellten Ausgangslage stehen, wobei sich innerhalb der Kammer 65 ein hydraulischer Druck aufbaut; hierbei wirkt am Stößelkolben 69 über die am Stößelkolben angreifende Druckstange 101 die Gegenkraft der auszurückenden Kupplung. Im Verlaufe der Relativverschiebung zwischen dem Betätigungskolben 67 und dem Zylinder 37 überfährt die am Betätigungskolben befindliche Dichtung 71 die Bohrungen 77, d.h., daß die das hydraulische Medium aufnehmende Kammer 65 geschlossen wird. Die in der Kammer 65 bestehende hydraulische Säule wirkt nunmehr als hydraulisches Gesperre derart, daß der Kraftfluß vom Betätigungskolben 67 über die hydraulische Säule direkt in den Stößelkolben 69 eingeht und auf die Druckstange 101 übertragen wird. Hierbei ist der Betätigungsweg durch das vorgegebene Gebervolumen am Kupplungspedal 7 festgelegt. Der Stößelkolben 69 wirkt mittels der Druckstange 101 auf die Kupplung ein, d.h. die Kupplung wird bei Betätigung des Arbeitskolbens 25 in Pfeilrichtung A gelöst, also ausgerückt. Die Anschlagscheibe 51 wirkt beim Ausfahren des pneumatischen Arbeitskolbens 25 gegenüber dem Anschlag 55. Hierdurch wird der Hub des Arbeitskolbens begrenzt. Die Position des Stößelkolbens 69 bezüglich des Zylinders 37 ist in der Ausgangsposition, also bei neuen Kupplungsbelägen, durch einen Anschlagring 103 vorgegeben. Bei Rückführung des Arbeitskolbens 25 ist der Anschlagring 53 gegenüber der Anschlagscheibe 57 wirksam, d.h. hierdurch wird die Relativlage des Zylinders 37 bezüglich der Ausgangsposition des Arbeitskolbens 25 sichergesellt.

Bei ausschließlich pneumatischer Betätigung, d.h. Steuerung mittels des Magnetventils 11, wird der mit der Leitung 9 verbundene Raum 105 pneumatisch beaufschlagt, wodurch der Kolben 91 gegen die Kraft der Feder 93 den Ventilteller 95 von seinem Einlaßsitz abhebt und somit in vorgenannter Weise den Raum 99 mit dem Raum 27 verbindet. Der Arbeitskolben 25 wird hierbei pneumatisch beaufschlagt, ohne daß gleichzeitig eine hydraulische Beaufschlagung des Arbeitskolbens 17 geschieht; der Arbeitskolben 17 bleibt stehen, so daß ein unnötiges Nachsaugen und Nachfüllen eines hydraulischem Mediums in den Zylinderraum 19 entfällt.

Die Rückführung des Kupplungskraftverstärkers bzw. das Schließen der Kupplung erfolgt durch Druckreduzierung im Raum 85 (bei Entlastung des Kupplungspedals 7) bzw. durch Druckreduzierung im Raum 105 (bei Steuerung durch das Magnetventil 11), mit der Folge, daß der Raum 27 über eine (nicht dargestellte) Verbindung und über das Steuerventil 1 entlüftet wird. Bei vorangehender Betätigung mittels des Kupplungspedals, d.h. daraus folgender hydraulischer Druckbeaufschlagung des Zylinderraums 19, wird auch dieser druckentlastet. Das Zurückgehen des pneumatischen Arbeitskolbens 25 bzw. das gemeinsame Zurückgehen von Arbeitskolben 25 und Arbeitskolben 17 geschieht unter Einwirkung von Rückstellkräften an der Kupplung, welche über den Stößelkolben 69 und die hydraulische Säule in der Kammer 65 zur Wirkung kommen. Eine Rückstellkraft wird außerdem direkt von der Feder 45 auf den Arbeitskolben 25 abgegeben, wobei der Arbeitskolben 25 durch die Feder 45 in die wiedergegebene Ausgangslage geschoben wird und der Zylinder 37 in der das Nachstellventil 63 Öffnenden Position verbleibt, da sich während des Zurückgehens der Anschlagring 53 an die stationäre Anschlagscheibe 57 anlegt. Bei geöffnetem Nachstellventil 63 kann sich der Stößelkolben 69 um das den Verschleiß Kupplungsbeläge entsprechende Maß in Richtung des Betätigungskolbens 67 bewegen, wobei hydraulisches Medium aus der Kammer 65 durch die Bohrungen 77 in die Kammer 59 verdrängt wird. Dieser Hub des Stößelkolbens 69 ist als Nachstellhub zu bezeichnen, wobei für die Nachstellung die gesamte Länge der Kammer 65 zur Verfügung steht. So kann sich im Verlaufe längerer Betätigung der Kupplung der Stößelkolben 69 zunehmend in Richtung des Betätigungskolbens 67 bewegen und sich schließlich an diesen anlegen. Die Belagstärke der Kupplungsbeläge ist entsprechend diesem Hub zu wählen. Das jeweils aus der Kammer 65 verdrängte hydraulische Medium, welches durch die Bohrungen 77 in die Kammer 59 gelangt, wirkt dort auf den Ausgleichskolben 35 ein, mit der Folge, daß sich der Ausgleichskolben entsprechend dem verdrängten hydraulischen Medium gegen die Kraft der Feder 39 nach rechts gerichtet bewegt. Je nach Auslegung der Feder 39 kann in den Kammern 59 und 65 bei entlüftetem Gerät ein definierter Druck herrschen, der den Stößelkolben 69 und die Druckstange 101 immer in Anlage zum Kupplungshebel (nicht dargestellt) hält. Die Feder 79 trägt zusätzlich dazu bei, den Stößelkolben 69 und die Druckstange 101 an den Kupplungshebel anzulegen, so daß beim Ausrücken der Kupplung sofort Kraftschluß besteht.

Die innerhalb des Sekundärraums 107 befindliche Luft steht über ein (nicht dargestelltes) Entlüftungsventil mit der Außenluft in Verbindung, d.h. Volumenveränderungen im Sekundärraum sind ohne weiteres möglich, ohne daß ein Über- oder ein Unterdruck auftritt.

Grundsätzlich ist von Bedeutung, daß gemäß der Erfindung das Nachstellventil wegabhängig geschlossen und geöffnet wird und die Kraft unmittelbar über die hydraulische Säule auf den Stößelkolben 69 weitergegeben wird. Der Zylinder 37 hat somit lediglich die Aufgabe, das hydraulische Medium zwischen Betätigungskolben und Stößelkolben zu speichern bzw. während des Nachstellhubs hydraulisches Medium in die zusätzliche Kammer 59 abzugeben, wenn das Nachstellventil geöffnet ist. Sollte der Zylinder 37 bei Betätigung des Kupplungskraftverstärkers an die Innenseite des Arbeitskolbens 25 angelegt sein, so geschieht dies lediglich durch die geringfügige Anlegekraft der Feder 43, welche ständig bestrebt ist, den Zylinder in seine Ausgangslage zurückzuschieben. Die Kraftübertragung selbst erfolgt jedoch unmittelbar über die hydraulische Säule zwischen Betätigungskolben und Stößelkolben.

**Bezugszeichen**

| 1 | Steuerventil |
|---|---|
| 3 | Leitung |
| 5 | Geberzylinder |
| 7 | Kupplungspedal |
| 9 | Leitung |
| 11 | Magnetventil |
| 13 | Gehäuse |
| 15 | Gehäuse |
| 17 | Arbeitskolben |
| 19 | Zylinderraum |
| 21 | Stößel |
| 23 | Vertiefung |
| 25 | Arbeitskolben |
| 27 | Raum |
| 29 | Führungsring |
| 31 | Abdichtung |
| 33 | Fortsatz |
| 35 | Ausgleichskolben |
| 37 | Zylinder |
| 39 | Feder |
| 41 | Anschlagbügel |
| 43 | Feder |
| 45 | Feder |
| 47 | Einlegeteil |
| 49 | Boden |
| 51 | Anschlagscheibe |
| 53 | Anschlagring |
| 55 | Anschlag |
| 57 | Anschlagscheibe |
| 59 | Kammer |
| 61 | Füllstopfen |
| 63 | Nachstellventil |
| 65 | Kammer |
| 67 | Betätigungskolben |
| 69 | Stößelkolben |
| 71 | Dichtung |
| 73 | O-Ring |
| 75 | Ring |
| 77 | Bohrungen |
| 79 | Feder |
| 81 | Anschlagscheibe |
| 83 | Sicherungsring |
| 85 | Raum |
| 87 | Kanal |
| 89,91 | Steuerkolben |
| 93 | Feder |
| 95 | Ventilteller |
| 97 | Raum |
| 99 | Raum |
| 101 | Druckstange |
| 103 | Anschlagring |

105     Raum
107     Sekundärraum

## Patentansprüche

1. Hydropneumatischer Kupplungskraftverstärker für Kraftfahrzeuge, mit in einem Gehäuse (13,15) zu einer Tandemanordnung angeordneten, hydraulischen und pneumatischen Arbeitskolben (17,25), welche unter Steuerung durch ein Steuerventil (1) auf eine gemeinsame, die Kupplung betätigende Druckstange (101) einzuwirken vermögen, mit einer Nachstellvorrichtung von hydraulischer Wirkungsweise, welche selbsttätig den Hub des Kupplungsverstärkers am pneumatischen Arbeitskolben (25) nachstellt, wobei die Nachstellvorrichtung aus zwei mit hydraulischem Medium gefüllten, mit dem pneumatischen Arbeitskolben (25) verfahrbaren Kammern (65,59) besteht, von welchen sich die erste Kammer (65) im Kraftfluß des pneumatischen Arbeitskolbens (25) zum Kupplungshebel befindet und bei Rückführung des pneumatischen Arbeitskolbens (25) mit der zweiten Kammer (59) verbindbar ist, um ein dem nachzustellenden Belagverschleiß entsprechendes Volumen des hydraulischen Mediums von der ersten Kammer (65) in die zweite Kammer (59) zu verdrängen und sich die erste (65) der Kammern innerhalb eines mit dem pneumatischen Arbeitskolben (25) verfahrbaren, relativ zu diesem begrenzt axial verschieblichen Zylinders (37) befindet, wobei die erste (65) Kammer einerseits durch einen vom Arbeitskolben (25) getragenen, in den Zylinder (37) eintauchenden Betätigungskolben (67) und andererseits durch einen mit der Druckstange (101) des Kupplungskraftverstärkers verbundenen, gleichfalls im Zylinder (37) geführten Stößelkolben (69) begrenzt ist, derart, daß bei geschlossener Kammer (65) die Kraft des pneumatischen Arbeitskolbens (25) über das als starre Säule wirkende hydraulische Medium direkt auf den Stößelkolben (69) und somit über die Druckstange (101) auf den zu betätigenden Kupplungshebel übertragbar ist, wobei der Betätigungskolben (67) Bestandteil eines Nachstellventils (63) ist und bei Betätigung und daraus resultierender Relativverschiebung zum Zylinder (37) die von der ersten Kammer (65) zur zweiten Kammer (59) bestehende Verbindung schließt, dadurch gekennzeichnet, daß am Außenumfang des Betätigungskolbens (67) eine Dichtung (71) vorgesehen ist, wobei sich im Verfahrweg der Dichtung (71) von der ersten Kammer in die zweite Kammer führende Bohrungen (77) durch die Wand des Zylinders (37) erstrecken.

2. Kupplungskraftverstärker nach Anspruch 1, dadurch gekennzeichnet, daß die Dichtung (71) aus einem in eine Umfangsnut des Betätigungskolbens (67) eingesetzten O-Ring (73) besteht, welcher an seinem Außenumfang einen Ring (75) aus Polytetrafluoräthylen trägt, derart, daß der Ring (75) bei Überschleifen der Bohrungen (77) die Verbindung zwischen den beiden Kammern sperrt.

3. Kupplungskraftverstärker nach einem der vorangehenden Ansprüche, dadurch gekennzeichnet, daß sich zwischen den einander zugewandten Seiten des Betätigungskolbens (67) und des Stößelkolbens (69) eine den Stößelkolben in Richtung des Kupplungshebels vorspannende Feder (79) abstützt.

## Claims

1. A hydro-pneumatic clutch booster for motor vehicles, with hydraulic and pneumatic working pistons (17, 25) arranged in a housing (13,15) in a tandem arrangement, which can act under the control of a control valve (1) on a common thrust rod (101) actuating the clutch, with an adjusting device operating hydraulically which automatically adjusts the stroke of the clutch booster on the pneumatic working piston (25), wherein the adjusting device consists of two chambers (65, 59), able to be conveyed with the pneumatic working piston (25) and filled with the hydraulic agent, the first chamber (65) of which is located in the path of the force of the pneumatic working piston (25) to the clutch lever and, when the pneumatic working piston (25) returns, is able to be connected to the second chamber (59) in order to displace a volume of hydraulic agent, corresponding to the erosion of the lining to be adjusted, from the first chamber (65) into the second chamber (59), and the first (65) of the chambers is located within a cylinder (37), able to be conveyed with the pneumatic working piston (25) and axially displaceable in a limited manner relative to said piston, wherein the first (65) chamber is defined, on the one hand, by an actuating piston (67) plunging into the cylinder (37) and carried by the working piston (25) and, on the other hand, by a ram piston (69), also guided in the cylinder (37) and connected to the thrust rod (101) of the clutch booster, in such a way that when the chamber (65) is closed the force of the pneumatic working piston (25) is able to be transferred by way of the hydraulic agent, acting as rigid column, directly to the ram piston (69) and thus by way of the thrust rod (101) to the clutch lever to be actuated, wherein the actuating piston (67) is a component of an adjusting valve (63) and upon actuation and with the resulting displacement relative to the cylinder (37) the connection existing between the first chamber (65) and the second chamber (59) closes, characterised in that on the outer periphery of the actuating piston (67) a seal (71) is provided, wherein in the travelling path of the seal (71) bores (77) leading from the first chamber into the second chamber extend through the wall of the cylinder (37).

2. A clutch booster according to claim 1, characterised in that the seal (71) consists of an O-ring inserted into a peripheral groove of the actuating piston (67), which, on its outer periphery, carries a ring (75) of polytetrafluoroethylene, such that the ring (75) blocks the connection between both chambers upon sliding over the bores (77).

3. A clutch booster according to one of the preceding claims, characterised in that a spring (79), prestressing the ram piston in the direction of the clutch lever, is supported between the sides of the actuating piston (67) and of the ram piston (69) facing each other.

**Revendications**

1. Amplificateur hydropneumatique de la force d'un embrayage pour des véhicules automobiles, comportant, dans un carter (13, 15) et suivant un agencement en tandem, des pistons moteurs hydraulique et pneumatique (17, 25) qui, sous le contrôle d'une soupape de commande (1), sont capables d'agir sur une tige de pression commune (101) actionnant l'embrayage, ainsi qu'un dispositif de rattrapage des jeux à action hydraulique qui réajuste automatiquement la course de l'amplificateur d'embrayage au niveau du piston moteur pneumatique (25), ledit dispositif de rattrapage des jeux étant constitué par deux chambres (65, 59) à remplissage avec un milieu hydraulique et déplaçables avec le piston de travail pneumatique (25), chambres dont la première (25) est située, dans la voie de transmission des forces, entre le piston moteur pneumatique (25) et le levier d'embrayage, et est susceptible d'être reliée à la seconde chambre (59), lors du renvoi du piston moteur pneumatique (25), afin de refouler de la première chambre 565) dans la seconde chambre (59) un volume du milieu hydraulique qui correspond à l'usure de la garniture à rattraper et que la première (65) des chambres se situe à l'intérieur d'un cylindre (37) déplaçable avec le piston moteur pneumatique (25) et déplaçable axialement et de façon limitée par rapport à ce dernier, la réalisation étant telle que la première chambre (65) est délimitée, d'une part, par un piston de commande (67) porté par le piston moteur (25) et pénétrant dans le cylindre (37), et, d'autre part, un piston-poussoir (69) relié à la tige de pression (101) de l'amplificateur de la force d'embrayage et également guidé dans le cylindre, de manière que lorsque la chambre (65) est fermée, la force du piston moteur pneumatique est susceptible d'être transmise, par l'intermédiaire du milieu hydraulique qui agit comme une colonne rigide, directement sur le piston-poussoir (69), et, de ce fait, et par l'intermédiaire de la tige de pression (101), sur le levier de débrayage à actionner, le piston de commande (67) étant un élément constitutif d'une soupape de rajustage (63) et ferme, lors de son actionnement et du déplacement relatif qui en résulte par rapport au cylindre (37), la liaison qui existe entre la première chambre (65) et la seconde chambre (59), caractérisé par le fait qu'à la périphérie du piston de commande (67) est prévu un élément d'étanchéité (71), alors que dans la voie du déplacement de l'élément d'étanchéité (71) s'étendent à travers la paroi du cylindre (37) des perçages (77) qui mènent de la première chambre dans la seconde chambre.

2. Amplificateur de la force d'un embrayage selon la revendication 1, caractérisé par le fait que l'élément d'étanchéité (71) est constitué par un anneau torique (73) monté dans une gorge périphérique du piston de commande (67), lequel anneau torique porte, sur sa périphérie extérieure, un anneau (75) en polytétrafluoréthylène de façon que l'anneau (75), lorsqu'il passe sur les perçages (77), interdit la liaison entre les deux chambres.

3. Amplificateur de la force d'un embrayage selon l'une des revendications précédentes, caractérisé par le fait qu'entre les côtés voisins du piston de commande (67) et du piston-poussoir (69), prend appui un ressort qui charge le piston-poussoir en direction du levier de débrayage.